# EUROPÄISCHE PATENTSCHRIFT

(11) **EP 1 691 476 B1**
(45) Veröffentlichungstag und Bekanntmachung des Hinweises auf die Patenterteilung: **29.04.2009**
(21) Anmeldenummer: 05002938.8
(22) Anmeldetag: 11.02.2005
(51) Int. Cl.: H02P 6/08

(54) **Zweiphasenpermanentmagnetmotor**
Two phase permanent magnet motor
Moteur biphasé à aimant permanent

(43) Veröffentlichungstag der Anmeldung: 16.08.2006
(73) Patentinhaber: Grundfos Management A/S, 8850 Bjerringbro (DK)
(72) Erfinder: Kragh, Henrik, 9520 Skorping (DK); Henriksen, Bjarne, 8722 Hedensted (DK)
(74) Vertreter: Vollmann, Heiko

(56) Entgegenhaltungen:
- WO-A-20/04008623
- DE-A1- 3 044 062
- JP-A- 07 046 872
- US-A- 4 734 627
- US-A- 5 952 798
- US-B1- 6 465 973

## Beschreibung

Die Erfindung betrifft einen Zweiphasenpermanentmagnetmotor sowie ein Verfahren zum Ansteuern eines dreiphasigen Wechselrichters zum Betrieb eines solchen Zweiphasenpermanentmagnetmotors gemäß den im Oberbegriff des Anspruchs 3 aufgeführten Merkmalen.

Insbesondere zum Antrieb von Kreiselpumpen kleiner und mittlerer Leistung (z.B. 20 W bis 100 W), wie sie typischerweise in Heizungsanlagen als Umwälzpumpen eingesetzt werden, zählt es zum Stand der Technik, Asynchronmotoren als Nassläufer einzusetzen. Um diese effektiv betreiben, d. h. an den tatsächlichen Bedarf der Anlage anpassen zu können, ist es weiter bekannt, diese mittels eines Frequenzumrichters anzusteuern, so dass sie stufenlos über weite Drehzahlbereiche betrieben werden können. In diesem Bereich energetisch noch günstiger sind Permanentmagnetmotoren. Um diese mit unterschiedlichen Drehzahlen fahren zu können, zählt es zum Stand der Technik, einen elektronischen Drehzahlsteller vorzuschalten. Um hier einen hohen Wirkungsgrad zu erzielen, werden regelmäßig dreiphasige Motoren eingesetzt, denen auch ein dreiphasiger Drehzahlsteller vorgeschaltet ist.

Um bei einem solchen dreiphasigen Motor einen hohen Wirkungsgrad zu erzielen, ist es erforderlich, die Phasenwicklung eng um den jeweiligen Statorzahn zu wickeln. Insbesondere bei modernen Motoren mit segmentiertem Stator ist der dreiphasige Aufbau vergleichsweise aufwändig.

Vor diesem Hintergrund liegt der Erfindung die Aufgabe zugrunde, einen Zweiphasenpermanentmagnetmotor so auszubilden, dass er zum einen energetisch günstig betrieben und zum anderen kostengünstig hergestellt werden kann. Im Weiteren soll ein Verfahren zum Ansteuern eines dreiphasigen Wechselrichters so ausgebildet werden, dass ein zweiphasiger Permanentmagnetmotor damit energetisch günstig, d. h. mit hohem Wirkungsgrad betrieben werden kann.

Der vorrichtungsmäßige Teil dieser Aufgabe wird gemäß der Erfindung durch einen Zweiphasenpermanentmagnetmotor mit den im Anspruch 1 angegebenen Merkmalen gelöst. Der verfahrensmäßige Teil dieser Aufgabe wird durch die in Anspruch 3 angegebenen Merkmale gelöst. Vorteilhafte Ausgestaltungen der Erfindung sind in den Unteransprüchen, der nachfolgenden Beschreibung sowie der Zeichnung angegeben.

Gemäß der vorliegenden Erfindung ist es vorgesehen, einen Zweiphasenpermanentmagnetmotor mit einem Frequenzumrichter anzusteuern. Hierdurch wird ein kompaktbauender Motor mit hoher Drehzahlvarianz geschaffen, der insbesondere unter Zugrundelegung des erfindungsgemäßen Verfahrens mit hohem Wirkungsgrad betrieben werden kann und kostengünstig in der Herstellung ist, insbesondere wenn ein, wie weiter unten noch angegeben, kostengünstiger Frequenzumrichter eingesetzt wird.

Vom technischen und elektronischen Aufbau am einfachsten ist ein Motor, bei dem die beiden Motorphasen parallel versorgt werden und eine Phase mit einem Kondensator in Reihe geschaltet ist, um für die erforderliche Phasenverschiebung zu sorgen. Bei einer solch einfachen Ausbildung wird vorteilhaft ein einphasiger Wechselrichter eingesetzt, so dass vom Aufbau her ein sehr einfacher Motor mit einem sehr einfachen Wechselrichter Verwendung finden kann. Eine solche Ausbildung kann bei hohen Stückzahlen auch kostengünstig hergestellt werden.

Derzeit noch günstiger ist jedoch eine erfindungsgemäße Weiterbildung, welche vorsieht, einen Zweiphasenpermanentmagnetmotor mit einem Frequenzumrichter anzusteuern, welcher einen Wechselrichter mit dreiphasigem Ausgang aufweist. Solche Wechselrichter sind sehr kostengünstig verfügbar, sind jedoch, um mit hohem Wirkungsgrad zu arbeiten, mit dem weiter unten genannten, erfindungsgemäßen Verfahren anzusteuern.

Bevorzugt wird dabei ein Wechselrichter verwendet, der sechs paarweise zugeordnete Schalter aufweist, von denen mindestens ein Paar diskontinuierlich geschaltet ist.

Um auf einfache Weise eine Phasenverschiebung zwischen den beiden Phasen eines Zweiphasenpermanentmagnetmotors herzustellen, ist es vorteilhaft, einen Kondensator in Reihe mit einer Phase zu schalten, da dann eine Phasenverschiebung durch den Frequenzumrichter nicht mehr gesondert steuerungsmäßig vorzusehen ist.

Das erfindungsgemäße Verfahren dient zum Ansteuern eines dreiphasigen Wechselrichters mit sechs Schaltern, die paarweise in Reihe geschaltet sind, wobei die Schalterpaare parallel an den Ausgang eines Gleichspannung führenden Zwischenkreises angeschlossen sind. Derartige Wechselrichter mit sechs Schaltern sind, wie schon oben ausgeführt, besonders kostengünstig im Markt verfügbar und daher grundsätzlich vorteilhaft mit einem Zweiphasenpermanentmagnetmotor einsetzbar. Ein Problem hierbei ist jedoch, dass bei dreiphasigen Wechselrichtern mit sechs Schaltern aufgrund der im Vergleich zu einem einphasigen Wechselrichter wesentlich höheren Schalthäufigkeit Schaltverluste auftreten, welche den Wirkungsgrad verschlechtern. Dies gerade vermeidet das erfindungsgemäße Verfahren, bei dem zwischen den Schaltern eines Schalterpaares jeweils mindestens ein Wicklungsende eines Zweiphasenpermanentmagnetmotors angeschlossen ist, derart, dass jede Wicklung zwischen zwei unterschiedlichen Schalterpaaren angeschlossen ist, und bei dem die Ansteuerung der Schalter so erfolgt, dass die Wicklungen mit zueinander phasenverschobenen Wechselspannungen beaufschlagt werden, dadurch, dass ein Schalter eines Schalterpaares über einen Drehwinkel von mindestens 10°, vorzugsweise zwischen 35° und 100° geschlossen gehalten und der andere geöffnet wird, während durch Modulieren der beiden anderen Schalterpaare der gewünschte Spannungsverlauf an den Wicklungen erzeugt wird. Dadurch, dass ein Schalter eines Schalterpaares gemäß der Erfindung über einen Drehwinkel von mindestens 10°, typischerweise jedoch zwischen 35° und 100° geschlossen bleibt, wird eine Vielzahl von Schaltvorgängen, nämlich die, wenn dieser Schalter ebenfalls modulierend geschaltet würde, eingespart und ebenso die damit auftretenden Schaltverluste.

Unter "modulierend Schalten" im Sinne der vorliegenden Erfindung sind die Schaltvorgänge zu verstehen, die mit hoher Frequenz, typischerweise beispielsweise 18 kHz, erfolgen, um die beispielsweise sinusförmige Wechselspannung durch Pulsweitenmodulation zu erzeugen, mit der der Motor beaufschlagt wird.

Zwar zählt es zum Stand der Technik, bei der Pulsweitenmodulation durch Übermodulation einen Schalter z. B. mehrere Schaltperioden geschlossen zu halten, doch niemals über einen so großen Drehwinkel von mindestens 10°. Die Übermodulation hat darüber hinaus insbesondere beim Einsatz eines Motors für eine Heizungsumwälzpumpe den gravierenden Nachteil, dass aufgrund der ungleichmäßigen Momentenentfaltung des Motors erhebliche Geräuschentwicklungen entstehen können, was die vorliegende Erfindung gerade vermeiden will. Das erfindungsgemäße Verfahren wird daher vorteilhaft so angewendet, dass die Wicklungen mit im Wesentlichen sinusförmigen und um 90° phasenverschobenen Wechselspannungen beaufschlagt werden, um gerade die bei nicht sinusförmiger Wicklungsbeaufschlagung auftretende Geräuschemission zu vermeiden.

In Weiterbildung des erfindungsgemäßen Verfahrens ist der Drehwinkel, während der ein Schalter geschlossen gehalten wird, vorbestimmt und abhängig vom aktuellen Winkel der Versorgungsspannung des Stators. Unter vorbestimmt im Sinne der Erfindung ist zu verstehen, dass das Ansteuerverfahren in Abhängigkeit geometrischer Verhältnisse im Mikroprozessor abgespeichert ist und nur von der Versorgungsspannung des Stators bzw. der sich daraus ergebenden Stellung des Rotors abhängig ist.

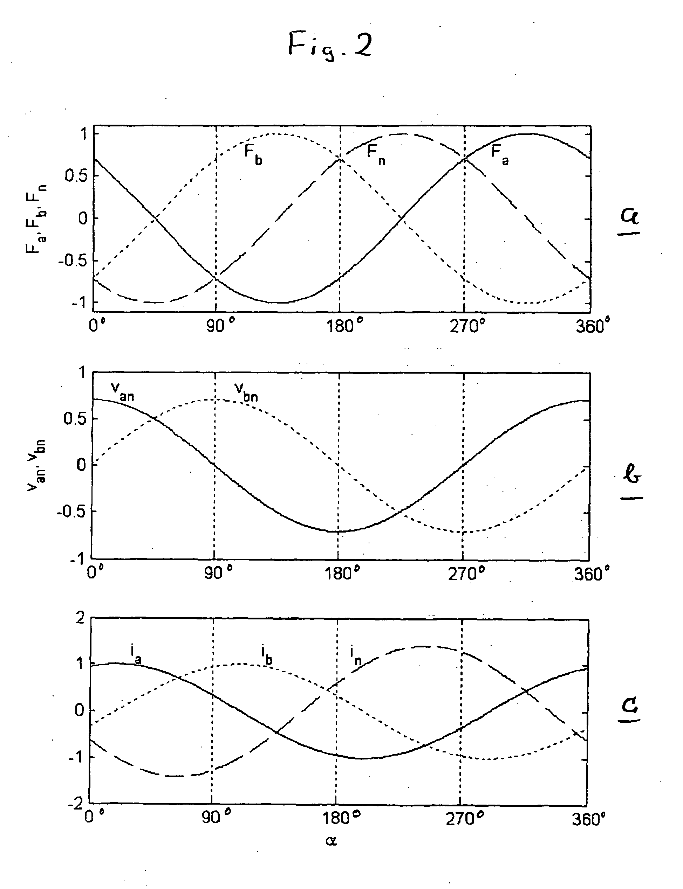

Es wird gemäß der Erfindung immer der Schalter über einen größeren Drehwinkel geschlossen gehalten wird, der ein der beiden am Ausgang des Zwischenkreises anliegenden Zwischenkreispotentiale nächstliegendes Sollwertpotential (bei idealisieren sinusförmigem Potentialverlauf entsprechend Fig. 2a) führt. Dann nämlich können die anderen beiden Schalterpaare modulierend angesteuert werden, um die gewünschte sinusförmige Wechselspannung zu erzeugen, ohne dass dort besonders hohe Schaltströme entstehen. Unter Sollwertpotentiale im Sinne der Erfindung sind die Spannungssollwerte zu verstehen, die in dem Mikroprozessor des Frequenzumrichters als Istwertvorgabe für den Mittelwertverlauf der Spannungen an den Ausgängen (Phasen) abgespeichert sind.

Grundsätzlich kann das erfindungsgemäße Verfahren über den gesamten Drehzahlbereich des Motors angewendet werden. Es kann jedoch insbesondere dann, wenn der Wechselrichter zum Erzeugen von Wechselspannungen niedriger und hoher Spannung und/oder Frequenz ansteuerbar ist, vorteilhaft so sein, dass das Geschlossenhalten eines Schalters über einen größeren Drehwinkel von mindestens 10° nur beim Erzeugen von Wechselspannungen hoher Spannung erfolgt und dann, wenn der Wechselrichter zum Erzeugen von Wechselspannungen niedriger Spannungen arbeitet, in an sich bekannter kontinuierlicher Weise angesteuert wird. Da bei hoher Spannung in der Regel höhere Ströme fließen als bei niedriger Spannung sind auch die Schaltverluste hier besonders hoch, weshalb es insbesondere in diesem Bereich vorteilhaft ist, einen Schalter über einen größeren Drehwinkel geschlossen zu halten.

Da die Schaltverluste am Schalter beim modulierenden Betrieb dann am höchsten sind, wenn der größte Strom fließt, ist gemäß einer Weiterbildung der Erfindung vorgesehen, stets den Schalter geschlossen zu halten, durch den der größte Strom fließt unter Berücksichtigung, dass dieser potentialmäßig einem der beiden Zwischenkreispotentiale nächstliegend ist und mit den übrigen Schaltern modulierend zu schalten.

Je länger ein Schalter geschlossen gehalten werden kann, desto geringer sind die dort auftretenden Schaltverluste. Gemäß der Erfindung ist es besonders vorteilhaft, wenn ein Schalter über einen Drehwinkel von etwa 90°, also eine Vierteldrehung des Motors geschlossen gehalten wird.

Da der Wechselrichter einen dreiphasigen Ausgang aufweist, der Zweiphasenpermanentmagnetmotor jedoch nur zwei Phasenwicklungen aufweist, liegt an zwei Phasenausgängen des Wechselrichters jeweils ein Wicklungsende an, wobei am dritten Phasenausgang die Wicklungsenden beider Wicklungen angeschlossen sind. Vorteilhaft dabei ist es, einen Schalter des Schalterpaares, an dem die Wicklungsenden beider Wicklungen angeschlossen sind, zunächst über einen Drehwinkel von 90° geschlossen zu halten, dann über einen Drehwinkel von etwa 90° modulierend zu schalten, wonach dann der andere Schalter dieses Schalterpaares über etwa 90° geschlossen gehalten und nachfolgend über etwa 90° modulierend geschaltet wird, wonach eine Motordrehung erfolgt ist und der Vorgang periodisch wiederholt werden kann. Eine solche Ansteuerung ist besonders günstig, da durch die Schalter, an denen beide Wicklungsenden angeschlossen sind, stets ein vergleichsweise hoher Strom fließt, so dass durch dieses Verfahren die Schaltverluste besonders gering gehalten werden können.

In Weiterbildung dieses Verfahrens kann vorteilhaft in den 90°-Intervallen, in denen kein Schalter des Schalterpaares, zwischen denen die Wicklungsenden beider Wicklungen angeschlossen sind, über einen Drehwinkel von mehr als 10° geschlossen gehalten wird, ein Schalter der beiden anderen Schalterpaare geschlossen gehalten werden, und zwar so, dass während des ersten 90°-Intervalls ein Schalter des einen und während des nächsten 90°-Intervalls ein Schalter des anderen Schalterpaares geschlossen gehalten wird. Bei diesem Verfahren wird praktisch ständig ein Schalter geschlossen gehalten, wodurch Schaltungsverluste klein gehalten werden können.

Alternativ kann in den 90°-Intervallen, in denen kein Schalter des Schalterpaares, zwischen dem die Wicklungsenden beider Wicklungen angeschlossen sind, geschlossen gehalten ist, jeweils ein Schalter der beiden anderen Schalterpaare geschlossen gehalten werden, und zwar für die ersten 45° des Intervalls ein Schalter des einen und für die zweiten 45° des Intervalls ein Schalter des anderen Schalterpaares.

Vorteilhaft kann es auch sein, während einer 360°-Drehung nur die Schalter geschlossen zu halten, welche die Leitungsverbindung zu nur einem der beiden Zwischenkreispotentiale herstellen. Dies ist insbesondere dann zweckmäßig, wenn eine Geräuschverminderung und Schaltverlustminderung erzielt werden soll.

Gemäß einer Weiterbildung der Erfindung können vorteilhaft während einer 360°-Drehung Schalter so geschlossen werden, dass abwechselnd über einen Drehwinkel von etwa 180° eine Leitungsverbindung zu einem und nachfolgend zum anderen der beiden Zwischenkreispotentiale hergestellt wird. In diesem Fall werden nur zwei Schalterpaare diskontinuierlich angesteuert. Auch hierdurch kann die Schalthäufigkeit reduziert werden.

Es kann vorteilhaft sein, die diskontinuierliche Schalteransteuerung für einen vorbestimmten Winkel, also typischerweise das Geschlossenhalten eines Schalters über einen Drehwinkel von mehr als 10° kurz vor dem Potentialwechsel durch eine kontinuierliche (modulierende) Schaltersteuerung zu ersetzen. Dies erfolgt vorzugsweise 1 bis 15 Schaltperioden vor dem Potentialwechsel, bezogen auf die Schaltperioden beim normalen modellierenden Betrieb. Auch hierdurch ist eine weitere Geräuschverminderung erzielbar.

Ein besonders gleichmäßiger Motorlauf wird dann erreicht, wenn die Ströme der beiden Motorphasen um einen vorbestimmten Winkel zueinander versetzt verlaufen. Es ist daher zweckmäßig, die Steuerung so auszulegen, dass ein solcher phasenversetzter Stromverlauf erreicht wird. Vorzugsweise sollte der Winkel der Phasen zueinander dem geometrischen Winkel der Phasen des Motors angepasst sein.

Um letzteres zu erreichen ist es vorteilhaft, die Phasenwinkel zwischen den Sollwertpotentialen der gemeinsamen Phase und den anderen Phasen um einen von 90° abweichenden Wert, vorzugsweise einen größeren Wert festzulegen. Dabei hat sich herausgestellt, dass eine Abweichung des Phasenwinkels zwischen 3° und 15° üblicherweise zu besonders guten Ergebnissen hinsichtlich des gewünschten Stromverlaufs führt.

Nach einer Weiterbildung der Erfindung ist es vorgesehen, dass der Schalter, der beide Motorwicklungen über einen Drehwinkel von 10° bis 100° mit einem der beiden Zwischenkreispotentiale verbindet, um einen Winkel Y später geschlossen wird als die Schalter, welche nur eine Motorwicklung über einen Drehwinkel von 10° bis 100° mit einem Zwischenkreispotential verbindet und dass die Schalter, welche nur eine Wicklung über einen Drehwinkel von 10° bis 100° mit einem Zwischenkreispotential verbinden entsprechend um einen Winkel Y später geöffnet werden. Dieser Winkel Y wird vorteilhaft so gewählt, dass er den Winkel der Phasenverschiebung zwischen Spannung und Strom in einer Motorwicklung entspricht.

Die Erfindung ist nachfolgend anhand von in der Zeichnung dargestellten Ausführungsbeispielen näher erläutert. Es zeigen:
- Fig. 1a bis e: Schaltbilder von Zweiphasenpermanentmagnetmotoren mit diese ansteuernden Wechselrichtern,
- Fig. 2a: die normalisierten Sollwertpotentiale eines konventionell angesteuerten dreiphasigen Wechselrichters zum Betrieb eines Zweiphasenpermanentmagnetmotors über eine Motordrehung,
- Fig. 2b: die sich daraus ergebenden normalisierten Spannungen an den Wicklungen eines Zweiphasenpermanentmagnetmotors,
- Fig. 2c: die sich daraus ergebenden normalisierten Ströme in den Phasen des Wechselrichters,

- Fig. 3a und aa: zwei unterschiedliche Sollwertpotentiale am dreiphasigen Ausgang eines Wechselrichters in Darstellung nach Fig. 2a,
- Fig. 3b: die sich daraus ergebenden normalisierten Spannungen an den beiden Wicklungen eines Zweiphasenpermanentmagnetmotors,
- Fig. 3c: die sich in den einzelnen Phasen des Wechselrichters einstellenden Ströme in normalisierter Darstellung,
- Fig. 4a bis 11 a: alternative Sollwertpotentiale am Ausgang eines dreiphasigen Wechselrichters in Darstellung nach Fig. 2a,
- Fig. 4b bis 1 1b: die dabei an den beiden Wicklungen eines Zweiphasenpermanentmagnetmotors anliegenden Spannungen,

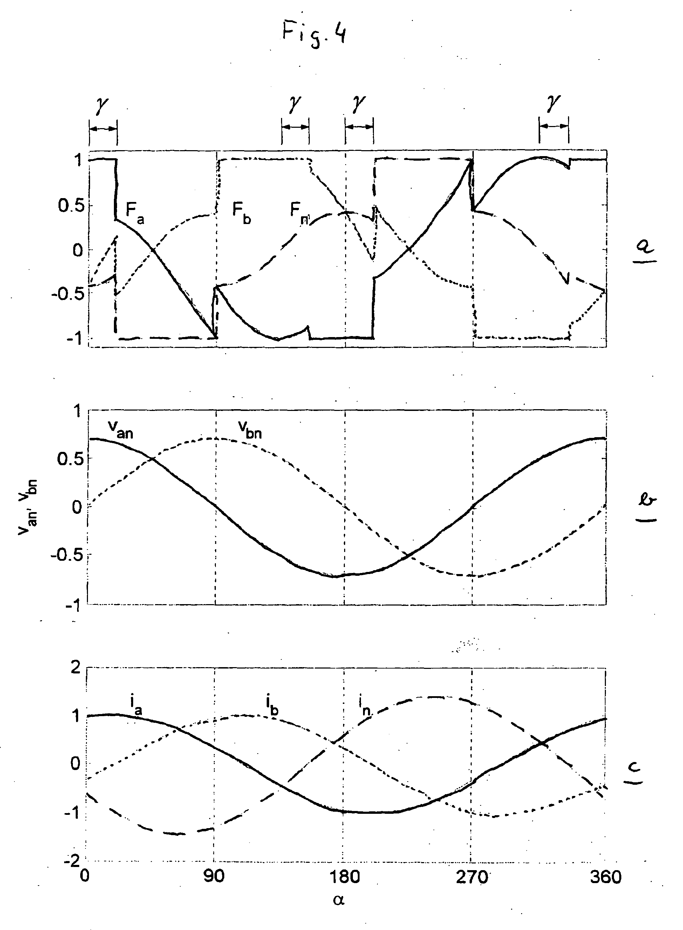

- Fig. 4 bis 7c: die sich dann in den Phasen des Wechselrichters ergebenden Ströme,

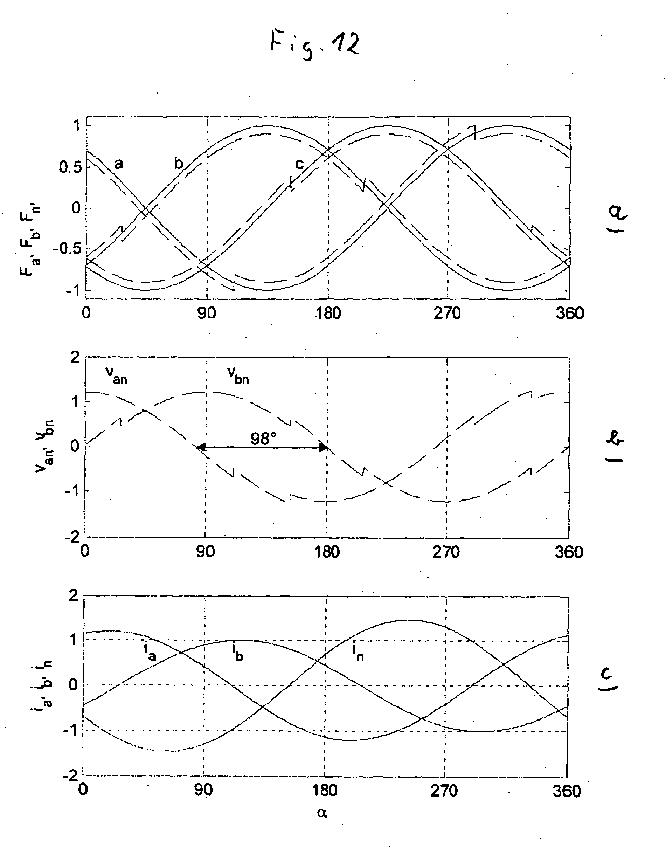

- Fig. 12a: die sich am dreiphasigen Ausgang des Wechselrichters tatsächlich ergebenden Potentiale im Vergleich zu den Sollwertpotentialen bei konventioneller Ansteuerung,
- Fig. 12b: die sich tatsächlich ergebenden Spannungen an den Wicklungen eines Zweiphasenpermanentmagnetmotors bei konventioneller Ansteuerung,
- Fig. 12 c: die sich tatsächlich einstellenden Ströme in den Phasen des Wechselrichters bei konventioneller Ansteuerung,

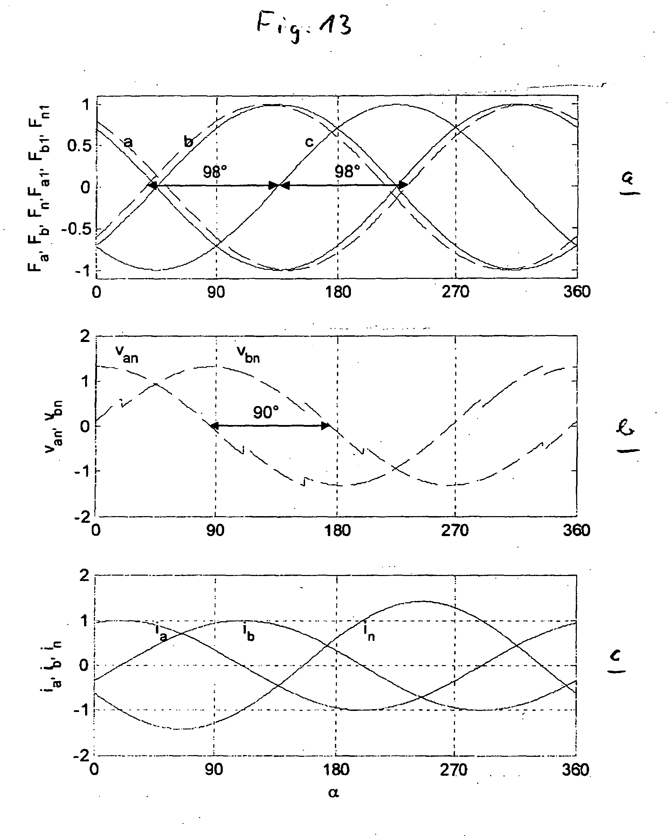

- Fig. 13a: Sollwertpotentiale an dem dreiphasigen Ausgang des Wechselrichters und die sich tatsächlich ergebenden Potentiale bei einem verbesserten Ansteuerungsverfahren,
- Fig. 13b: die sich dann tatsächlich einstellenden Spannungen an den Wicklungen des Zweiphasenpermanentmagnetmotors und
- Fig. 13c: die sich dann tatsächlich einstellenden Ströme.

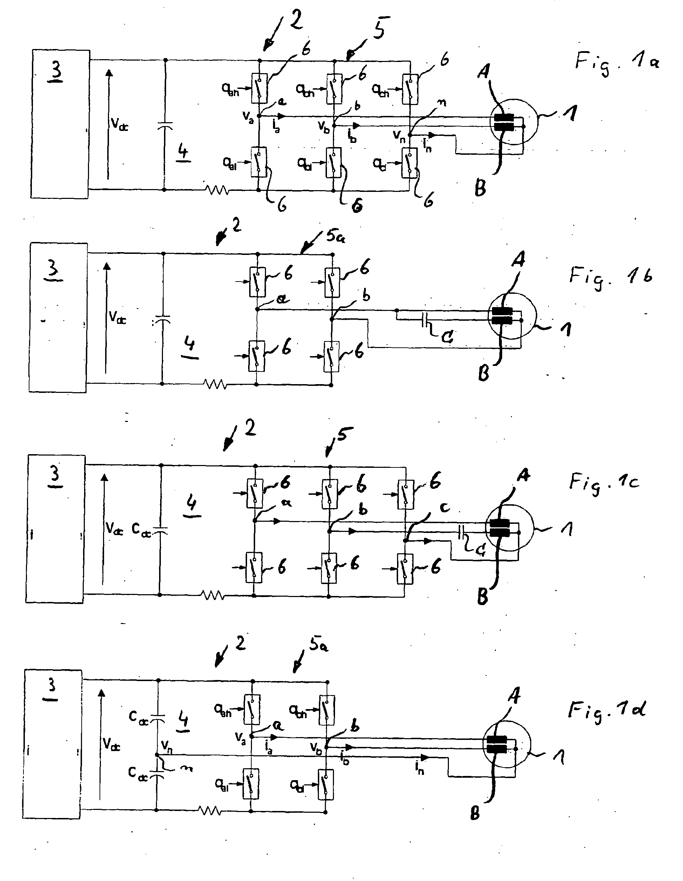

Fig. 1a zeigt einen Zweiphasenpermanentmagnetmotor 1, der von einem Frequenzumrichter 2 angesteuert wird. Der Frequenzumrichter 2 besteht in an sich bekannter Weise aus einem Eingangskreis 3 in Form eines Gleichrichters, einen daran anschließenden Zwischenkreis 4 sowie einem Wechselrichter 5. Es versteht sich, dass für die Anwendungen, bei denen eine Gleichspannungsquelle zur Verfügung steht, der Eingangskreis 3 entfällt und der Frequenzumrichter 2 dann als Frequenzerzeuger arbeitet.

Der Wechselrichter 5 weist gemäß Fig. 1a sechs elektronische Schalter G qₐₕ, q_{bh}, q_{ch} sowie qₐₗ, q_{bl} und q_{cl} auf, die jeweils paarweise in Reihe und parallel zum Ausgang des Zwischenkreises 4 geschaltet sind. Jeweils zwischen einem Schalterpaar qₐₕ-qₐₗ, q_{bh}-q_{bl}, q_{ch}-q_{cl} sind die beiden Wicklungen A und B des Motors 1 angeschlossen. Die Ausgänge (Phasen) des Wechselrichters 5 sind mit a, b und n gekennzeichnet.

Die Wicklung A des Motors 1 ist zwischen dem Ausgang a und dem Ausgang n des Wechselrichters angeschlossen, liegt also zwischen den Schaltern qₐₕ und qₐₗ einerseits sowie q_{ch} und q_{cl} andererseits. Die Wicklung B ist mit einem Ende am Ausgang b und mit dem anderen Ende am Ausgang n des Wechselrichters 5 angeschlossen, so dass beide Wicklungen A und B dem Ausgang n des Wechselrichters 5 und jeweils eine Wicklung A bzw. B mit dem Ausgang a bzw b des Wechselrichters 5 leitungsverbunden sind.

Die Kombination eines dreiphasigen Wechselrichters 5 zur Ansteuerung eines Zweiphasenpermanentmagnetmotors 1 ist aus den einleitend genannten Gründen besonders günstig, insbesondere wenn der Wechselrichter 5 mit dem weiter unten im Einzelnen beschriebenen erfindungsgemäßen Verfahren angesteuert wird.

Eine wesentlich einfachere Ansteuerung gibt sich, wenn der Zweiphasenpermanentmagnetmotor 1, wie in Fig. 1b dargestellt, durch einen zweiphasigen Wechselrichter 5a mit insgesamt 4 Schaltern 6 angesteuert wird, die jeweils paarweise parallel am Ausgang des Zwischenkreises 4 anliegen. Zwischen den Schalterpaaren ergeben sich die Ausgänge (Phasen) a und b, an denen jeweils parallel die Wicklungen A und B angeschlossen sind, wobei der Wicklung B zwecks Phasenverschiebung ein Kondensator C vorgeschaltet ist.

Die anhand von Fig. 1c dargestellte Ausführung umfasst ebenfalls einen Wechselrichter 5 mit sechs jeweils paarweise in Reihe angeordneten Schaltern 6 entsprechend der Ausführung nach Fig. 1a, jedoch ist auch hier der Wicklung B ein Kondensator C zwecks Phasenverschiebung vorgeschaltet.

Bei der Ausführung gemäß Fig. 1d ist dem Zweiphasenpermanentmagnetmotor 1 mit den Wicklungen A und B ein zweiphasiger Wechselrichter 5a mit den Ausgängen a und b vorgeschaltet. Im Unterschied zu der Ausführung gemäß Fig. 1b sind die Wicklungen A und B jedoch nicht parallel zum Ausgang des Frequenzumrichters geschaltet, sondern jeweils mit einem Ende an die Ausgänge a bzw. b geschaltet, wohingegen das andere Ende an einem Knoten n angreift, der zwischen der durch zwei Kondensatoren gebildeten Zwischenkreiskapazität anschließt.

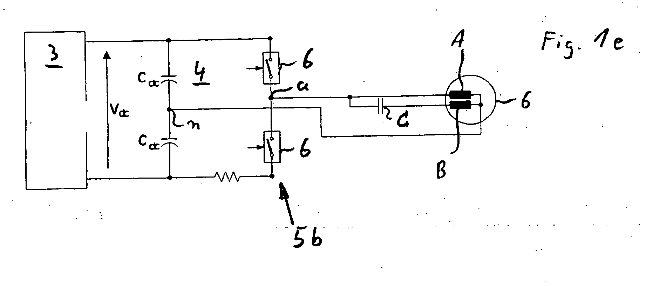

Bei der Ausführungsvariante gemäß Fig. 1e ist der Zweiphasenpermanentmagnetmotor 1 mit seinen Wicklungen A und B an einen Frequenzumrichter 2 mit einphasigem Wechselrichter 5b angeschlossen. Der Wechselrichter 5b weist zwei ebenfalls als Schalterpaar angeordnete Schalter 6 auf, die an den Ausgang des Zwischenkreises 4 anschließen und zwischen denen ein Ausgang a gebildet ist. Die Wicklungen A und B sind auch hier durch einen der Wicklung B vorgeschalteten Kondensator C in Betrieb phasenverschoben beaufschlagt. Das andere Ende der Wicklungen A und B schließt wie bei der Ausführung nach Fig. 1d im Zwischenkreis 4 an, und zwar dort am Knotenpunkt n, der durch zwei Kondensatoren jeweils mit dem Zwischenkreispotential verbunden ist.

Zum Betrieb eines zweiphasigen Motors am dreiphasigen Wechselrichter 5, wie es anhand von Fig. 1 a dargestellt ist, zählt es bei Asynchronmotoren zum Stand der Technik, durch modulierendes Schalten der Schalterpaare an den Ausgängen a, b und n die in Fig. 2 dargestellten und jeweils um 90° zueinander verschobenen Sollwertpotentiale Fₐ, F_{b} und Fₙ zu erzeugen. Die in den Figuren dargestellten Sollwertpotentiale, Spannungen und Ströme sind sämtlichst normiert und über einen Winkel von 360°, d.h. eine vollständige Motordrehung dargestellt. Die Modulation der Schalter 6 zur Erzeugung dieser Sollwertpotentiale Fₐ, F_{b} und Fₙ an den Ausgängen des Wechselrichters 5 werden in an sich bekannter Weise durch entsprechende Schaltmodulation der Schalter erreicht, diese Modulation erfolgt typischerweise mit einer Frequenz von 18 kHz.

Wenn, wie anhand von Fig. 1 a dargestellt, der Motor 1 mit seinen Wicklungen A und B so an den Ausgängen a, b und n des Wechselrichters 5 angeschlossen ist, dass die Wicklung A am Ausgang a, die Wicklung B am Ausgang b und die anderen Seiten beider Wicklungen am Ausgang n angeschlossen sind, dann ergeben sich die an den Wicklungen A und B anliegenden Spannungen Vₐₙ und V_{bn} entsprechend der an den Ausgängen a, b und n im jeweiligen Zeitpunkt anliegenden Potentiale Fₐ, F_{b} und Fₙ, so wie dies in Fig. 2b im Einzelnen dargestellt ist. Es handelt sich also um zwei im Wesentlichen um 90° zueinander versetzte etwa sinusförmige Wechselspannungen. Diesen idealisierten Spannungsverlauf zugrunde gelegt ergeben sich ebenfalls um 90° zueinander versetzte Ströme in den jeweiligen Ausgängen a, b und n des Wechselrichters 5, wie es anhand von Fig. 2c dargestellt ist.

Die sich tatsächlich ergebenden Spannungen und Ströme stimmen allerdings mit dieser idealisierten Form gemäß Fig. 2b und 2c nicht exakt überein, da sie durch Pulsweitenmodulation der Schalter gebildet werden. Darüber hinaus ergibt sich insbesondere dann, wenn ein Schalter 6 bei hohem Stromdurchfluss geschaltet wird, ein Schaltungsverlust. Aus diesem Grunde sind Ansteuerungen des Wechselrichters 5 vorgesehen, die dies vermeiden.

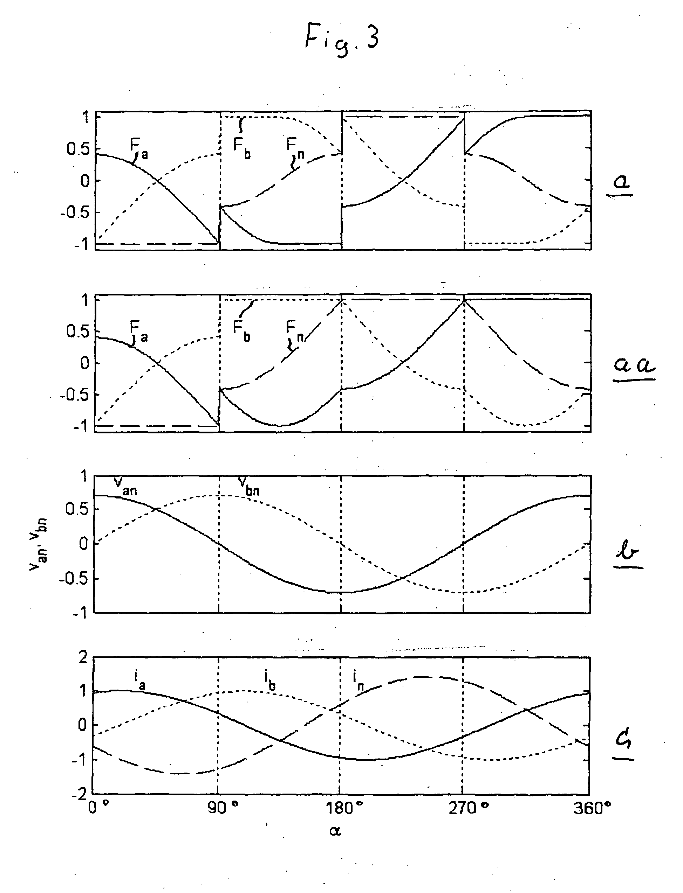

Wenn, wie in Fig. 3a dargestellt, die Potentiale an den Ausgängen a, b und n des Wechselrichters 5 so gesteuert werden, wie anhand der Fig. 3a bzw. 3aa dargestellt ist, so ergeben sich Spannungs- und Strömverläufe innerhalb der Wicklungen A und B, wie Sie anhand der Fig. 3b und 3c dargestellt sind. Diese unterscheiden sich ersichtlich nicht von denen der Fig. 2b und 2c. Allerdings sind die Sollwertpotentiale gemäß Fig. 3a sowie Fig. 3aa anders definiert. Bei dem Verfahren gemäß Fig. 3a ist der Verlauf des Sollwertpotentials Fₙ über eine Motorumdrehung von 360° so gewählt, dass während der ersten 90° das Sollwertpotential Fₙ, dem in der Figur unteren der beiden Zwischenkreispotentiale entspricht, d.h. der Schalter q_{cl} während dieses 90°-Intervalls geschlossen und der andere Schalter q_{ch} geöffnet ist. Die Modulation erfolgt ausschließlich durch modulierendes Schalten der beiden anderen Schalterpaare qₐₕ und qₐₗ bzw. q_{bh} und q_{bl}.

Für die zweiten 90° der Umdrehung erfolgt ein modulierendes Schalten, so dass am Ausgang n ein Sollwertpotentialverlauf Fₙ vorliegt. Im dritten 90°-Intervall wird wiederum der Ausgang n des Wechselrichters 5 mit einem der beiden Zwischenkreispotentiale, verbunden, und zwar mit dem, das während der ersten 90° nicht verbunden war. Im vierten 90°-Intervall hingegen erfolgt wiederum eine modulierende Schaltung dieses Schalterpaares entsprechend dem vierten Intervall in Fig. 3a. Auch im dritten Intervall, wenn am Ausgang n des Wechselrichters konstant ein Zwischenkreispotential anliegt, erfolgt die Modulation ausschließlich durch entsprechendes modulierendes Schalten der Potentiale Fₐ und F_{b}.

Wie Fig. 3a weiter zeigt, werden im zweiten 90° und im vierten 90°-Intervall jeweils abwechselnd die Potentiale F_{b} und Fₐ für jeweils 45° mit dem einen und dann mit dem anderen Zwischenkreispotential verbunden, wobei die Schaltung in dem zweiten und vierten Intervall jeweils umgekehrt erfolgt, d.h. im zweiten Intervall wird zunächst über ca. 45° das eine Ende der Wicklung B, das am Ausgang b des Wechselrichters 5 anliegt, mit dem einen Zwischenkreispotential verbunden und während der nächsten 45° das eine Ende der Wicklung A, das am Ausgang a anliegt, mit dem anderen Zwischenkreispotential. Im vierten Intervall erfolgt die Verbindung mit dem Zwischenkreispotential in entsprechender Weise, nur jeweils mit dem anderen Zwischenkreispotential.

Wie die Fig. 3a verdeutlicht, wird während des ersten 90°-Intervalls ein Schalter des Schalterpaares q_{ch}, q_{cl} ständig geschlossen gehalten und der andere geöffnet, wohingegen im dritten 90°-Intervall der andere Schalter ständig geschlossen gehalten wird und der eine Schalter geöffnet bleibt. Entsprechend wird in den zweiten und vierten 90°-Intervallen jeweils über 45° ein Schalter eines Schalterpaares geschlossen gehalten, welcher den Ausgang a bzw. b des Wechselrichters 5 ansteuert, der andere Schalter ist dabei geöffnet.

Wie Fig. 3a weiter zeigt, ist während der im Wesentlichen gesamten 360° ein stromführender Schalter 6 stets geschlossen, was den erheblichen Vorteil mit sich bringt, dass insoweit keine Schaltverluste mehr auftreten. Vergleicht man die Fig. 2a und die Fig. 3a, so wird deutlich, dass bei dem vorbeschriebenen Ansteuerungsverfahren stets der Schalter geschlossen gehalten wird, dessen Sollwertpotential auch beim modulierender Schaltweise einem der beiden Zwischenkreispotentiale nächstliegend wäre. Dabei erfolgt gemäß Fig. 3a eine Aufteilung über jeweils 45° der Sollwertpotentiale F_{b} und Fₐ.

Bei dem Ansteuerungsverfahren gemäß Fig. 3aa wird jeweils ein dem Ausgang n des Wechselrichters 5 zugeordnetes Schalterpaar in gleicher Weise angesteuert wie bei dem anhand von Fig. 3a vorbeschrieben Verfahren, nämlich während des ersten 90°-Intervalls und während des dritten 90°-Intervalls geschlossen gehalten, wobei im ersten 90° der eine Schalter des Schalterpaares und im dritten 90°-Intervall der andere Schalter des Schalterpaares geschlossen gehalten wird bzw. ständig geöffnet wird. Allerdings wird im zweiten 90°-Intervall ständig ein Schalter des den Ausgang b beaufschlagenden Schalterpaares geschlossen gehalten und das andere geöffnet und im vierten 90°-Intervall ein Schalter des den Ausgang a ansteuernden Schalterpaares ständig geschlossen gehalten, während der andere Schalter geöffnet ist. Dieses Ansteuerungsverfahren verbindet während eines 90°-Intervalls mit dem einen und während der übrigen drei 90°-Intervalle mit dem anderen Zwischenkreispotential.

Es hat sich als vorteilhaft erwiesen, das Geschlossenhalten von Schaltern, wie es beispielhaft anhand der Fig. 3a und 3aa beschrieben worden ist und auch weiter unten noch anhand weiterer Ausführungsbeispiele beschrieben werden wird, nicht entsprechend der geometrischen Wicklungsanordnung des Motors erfolgen zu lassen, sondern um einen Winkel Y versetzt. Dabei ist es zweckmäßig, den Schalter 6, welcher den Ausgang n des Wechselrichters 5 mit dem einen oder anderen Zwischenkreispotential während eines Drehwinkels von mehr als 10° verbindet, um einen Winkel Y später einzuschalten und zum Ausgleich dafür die Schalter 6, welche den Ausgang a bzw. den Ausgang b dauerhaft über mehr als 10° mit einem der Zwischenkreispotentiale verbinden, über einen Winkel Y später auszuschalten, jeweils bezogen auf das anhand der Fig. 3a bzw. 3aa vorbeschriebene oder andere erfindungsgemäße Ansteuerungsverfahren. Der Winkel Y wird dabei entsprechend der Phasenverschiebung zwischen Spannung und Strom in einer Motorwicklung A oder B gewählt, dies führt, wie Fig. 4c verdeutlicht, zu einem besonders gleichmäßigen Stromverlauf an den Ausgängen a, b und n des Wechselrichters 5 und somit zu einer sehr gleichmäßigen Momentenerzeugung im Motor 1, wodurch eine besonders geringe Geräuschemission erreicht wird, was insbesondere zum Antrieb von Heizungsumwälzpumpen von besonderem Vorteil ist.

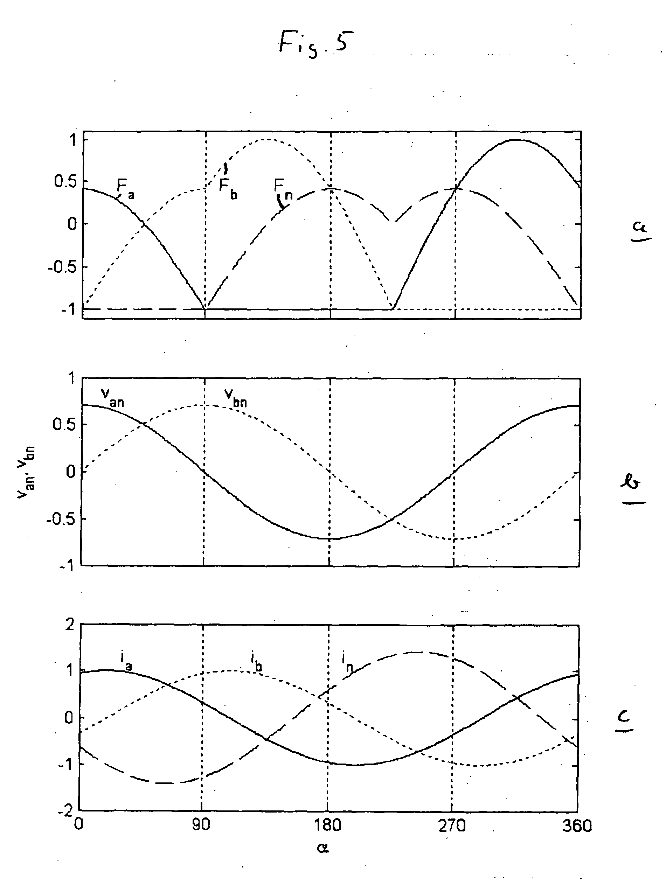

Bei dem Ansteuerverfahren gemäß Fig. 5 wird zunächst der Ausgang n des Frequenzumrichters für ein erstes 90°-Intervall mit einem der beiden Zwischenkreispotentiale beaufschlagt, dann wird während des zweiten 90°-Intervalls und des sich daran anschließenden 45°-Intervalls der Ausgang a mit diesem Zwischenkreispotential beaufschlagt, wonach schließlich für die zweite Hälfte des dritten 90°-Intervalls und das vierte 90°-Intervall der Ausgang b mit diesem Zwischenkreispotential beaufschlagt wird. Es versteht sich, dass auch hier dann, wenn einer der Ausgänge a, b oder n des Wechselrichters 5 mit einem Zwischenkreispotential beaufschlagt ist, die beiden anderen Ausgänge modulierend geschaltet werden, wie dies anhand von Fig. 5a erkennbar ist. Ein besonderes Merkmal des Ansteuerverfahrens gemäß Fig. 5 ist, dass stets nur Schalter einer Seite über mehr als 10° geschlossen gehalten werden und dass daraus resultierend dann auch stets nur das eine der beiden Zwischenkreispotentiale am jeweiligen Ausgang anliegt. Auch dieses Ansteuerverfahren ergibt, wie die Fig. 5b und 5c verdeutlichen, einen Spannungs- und Stromverlauf an den Wicklungen A und B, wie es auch bei einer kontinuierlichen Ansteuerung gemäß Fig. 2a erfolgt.

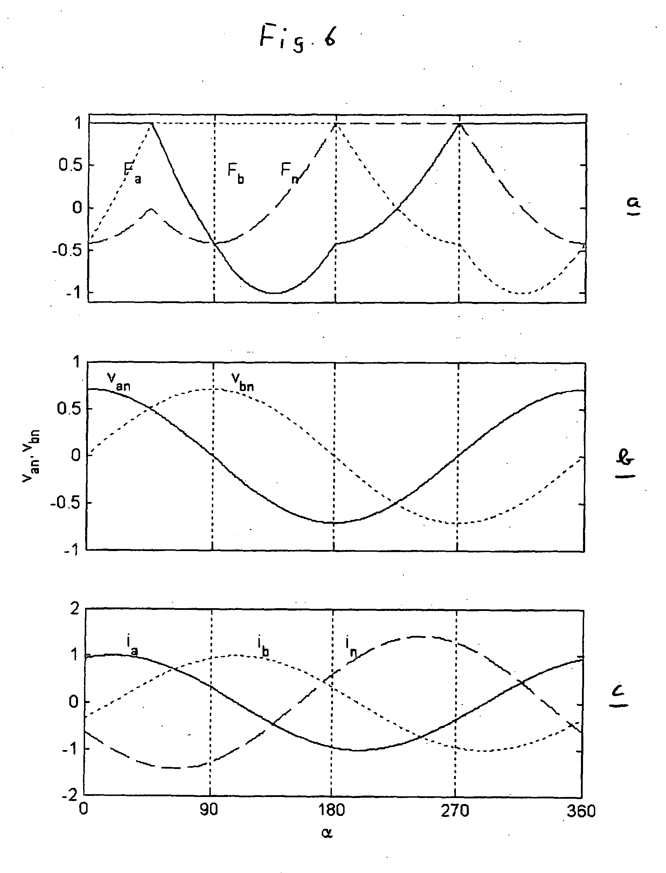

Das Ansteuerverfahren gemäß Fig. 6a entspricht prinzipiell dem anhand von Fig. 5a Vorbeschriebenen, allerdings erfolgt dort eine Verbindung der Ausgänge des Frequenzumrichters 5 mit dem anderen Zwischenkreispotential, entsprechend sind die Schalterstellungen um 180° verschoben.

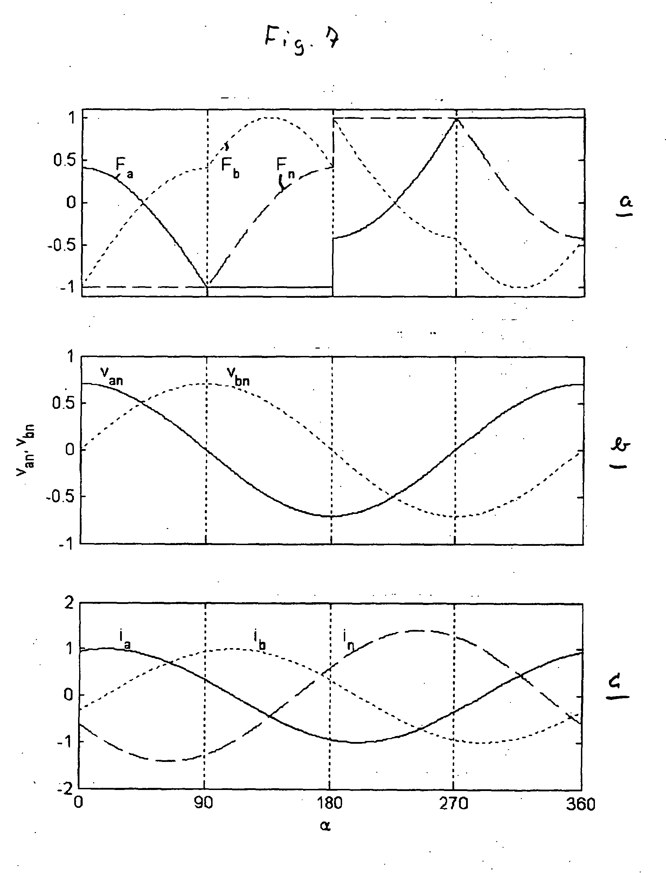

Das anhand von Fig. 7a dargestellte Ansteuerverfahren hält zunächst während eines ersten 90°-Intervalls einen der den Ausgang des Frequenzumrichters 5 beaufschlagenden Schalter geschlossen, so dass der Ausgang n mit dem einen Zwischenkreispotential beaufschlagt wird. Während des zweiten 90°-Intervalls wird dann der Ausgang b mit demselben Zwischenkreispotential beaufschlagt. Im dritten 90°-Intervall wird der Ausgang n dann mit dem anderen Zwischenkreispotential beaufschlagt und im vierten 90°-Intervall der Ausgang a dann auch mit dem anderen Zwischenkreispotential. Bei diesem Ansteuerverfahren wird das den Ausgang b steuernde Schalterpaar ständig modulierend angesteuert, wohingegen von den anderen beiden Schalterpaaren, die den Ausgang a und n schalten, jeweils ein Schalter für 90° geschlossen und der andere geöffnet bzw. umgekehrt. Wie die Fig. 7b und 7c verdeutlichen, wird auch bei diesem Ansteuerverfahren ein Spannungs-/Stromverlauf in den Wicklungen A und B erzeugt, wie er auch bei kontinuierlicher modulierender Beschaltung erfolgen würde (siehe Fig. 2c).

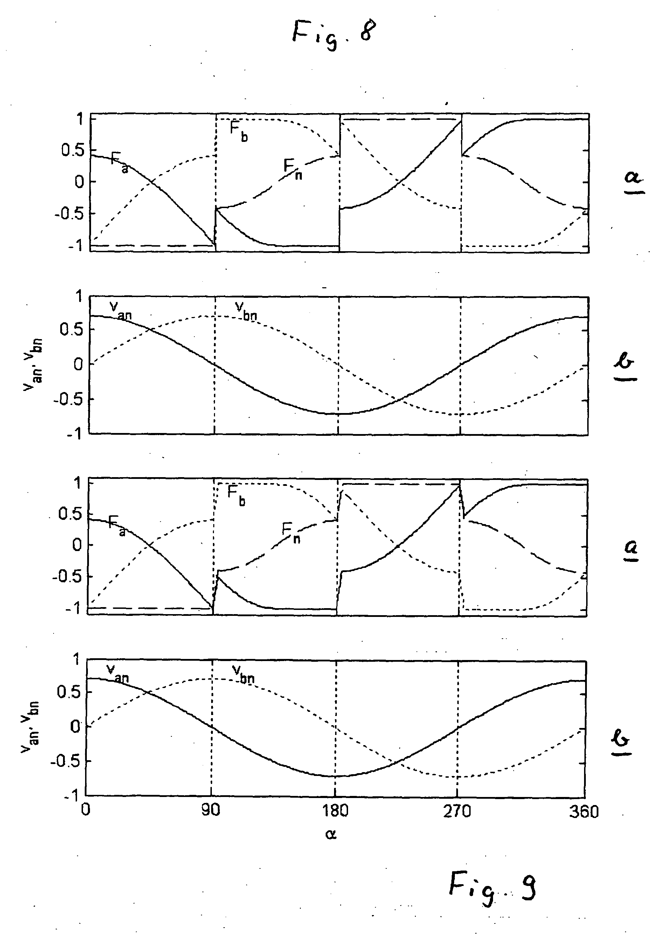

In Fig. 8 ist zur Übersicht das Ansteuerverfahren gemäß Fig. 3a noch einmal dargestellt, und zwar um anhand von Fig. 9a zu verdeutlichen, wie dieses Verfahren weiter optimiert werden kann. Dort erfolgt das Geschlossenhalten eines Schalters und damit die Beaufschlagung eines Ausgangs des Wechselrichters mit dem einen oder anderen Zwischenkreispotential über mehr als 10° nicht spontan, sondern über einen Winkel von beispielsweise 3° bis 5° ansteigend, in gleicher Weise erfolgt der Übergang in den modulierenden Schaltzustand nicht abrupt, sondern ebenfalls über 3° bis 5°, wie dies in Fig. 9a im Einzelnen dargestellt ist. Dadurch, dass ein Schalter, bevor er über einen Winkel von mehr als 10° geschlossen gehalten wird, zunächst modulierend ansteigend angesteuert wird, wird die mit dem entsprechendem Ausgang verbundene Wicklung nicht schlagartig mit dem vollen Zwischenkreispotential beaufschlagt, sondern in Form einer Rampe, was hinsichtlich der Geräuschentwicklung des Motors besonders günstig ist, d.h. einen ruhigen Lauf bewirkt.

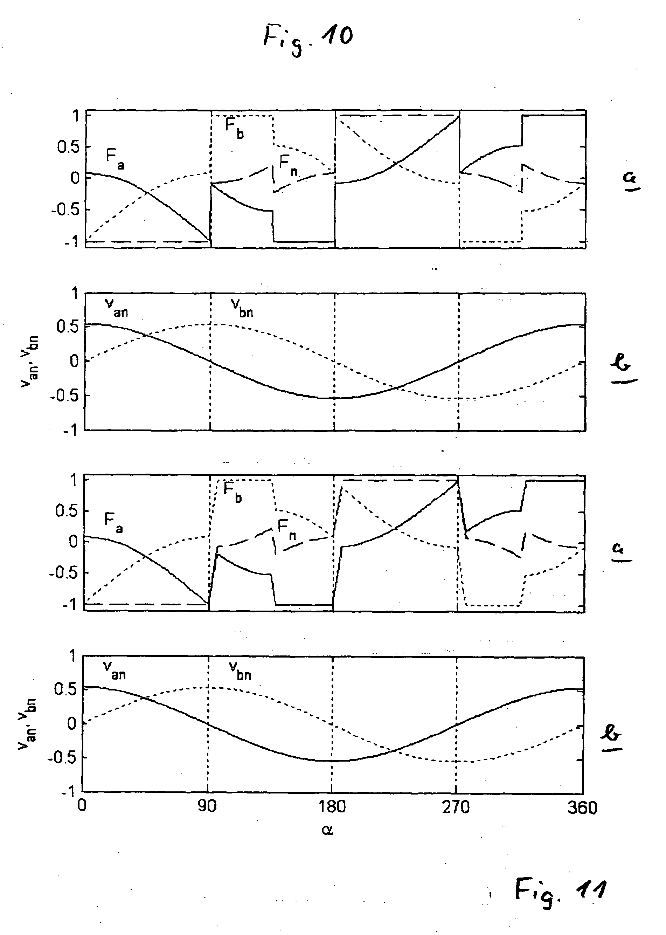

Eine Variante der Ansteuerung gemäß Fig. 8a ist gemäß Fig. 10a dargestellt. Dort allerdings erfolgt ein steilerer Anstieg im Bereich des Übergangs zwischen moduliertem Schalten und Geschlossenhalten über mehr als 10°. Der Vorteil dieses Verfahrens ist, dass die im modulierenden Betrieb vom Wechselrichter an den einzelnen Ausgängen erzeugten Potentialverläufe im Wesentlichen um Null pendeln, d.h. dass das Ansteuerverfahren so ausgelegt ist, dass entweder eine nach Möglichkeit ständige, d.h. über einen Winkel von mehr als 10° anhaltende Verbindung zu einem der beiden Zwischenkreispotentiale erfolgt oder aber ein nahe Null liegender Potentialverlauf erzeugt wird, das durch modulierendes Schalten entsteht. Je geringer der Potentialunterschied beim modulierenden Schalten ist, desto geringer sind auch die dabei fließenden Ströme und die dadurch verursachten Schaltverluste. Will man bei dem hinsichtlich der Schaltverluste besonders günstigen Ansteuerverfahren gemäß Fig. 10a die Laufruhe, d.h. insbesondere die Geräuschbelastung des Motors weiter verringern, dann kann das Verfahren gemäß einer Ansteuerung nach Fig. 11 a verbessert werden, ähnlich wie dies durch die Ansteuerung gemäß Fig. 9a für das Verfahren nach Fig. 8a erfolgt. Hier werden also auch über 3° bis 5° modulierend geschaltet, bevor ein Schalter für mehr als 10° geschlossen gehalten bzw. nachfolgend in den modulierenden Betrieb übergeführt wird.

Anhand von Fig. 12a ist in durchgezogenen Linien ein der Motorgeometrie entsprechender idealer Sollwertpotentialverlauf an den drei Ausgängen a, b und c eines dreiphasigen Wechselrichters dargestellt. Tatsächlich ist es jedoch nicht zweckmäßig, einen solch idealisierten Potentialverlauf vorzugeben, da dies dazu führen würde, dass die an den Wicklungen A und B anliegenden Spannungen nicht, wie gewünscht den geometrischen Anordnungen entsprechend um 90° phasenverschoben, sondern beispielsweise um 98° phasenverschoben wären. Dies führt zu ungleichen Strömen in den drei Phasen des Frequenzumrichters, wie anhand der Fig. 12c deutlich sichtbar ist. Die unterschiedlichen Ströme wiederum führen zu einer über die Motorumdrehung ungleichmäßige Momentenerzeugung im Motor, was u.a. auch zu nicht gewünschten Geräuschemissionen führen kann.

Um dies zu vermeiden und einen möglichst gleichmäßigen sinusförmigen und jeweils um 90° bzw. der Motorgeometrie entsprechenden phasenverschobenen Stromverlauf an den drei Ausgängen a, b und n des Wechselrichters und somit in den Motorwicklungen zu erzeugen ist es zweckmäßig, die Sollwertpotentiale nicht wie idealisiert um 90° zueinander phasenverschoben verlaufen zu lassen, sondern die Sollwertpotentiale insbesondere der Ausgänge, an denen nur eine Wicklung A oder B anschließt, gegenüber dem Ausgang, an den beide Wicklungen anschließen, um einen von 90° abweichenden Winkel, hier 98° versetzt anzuordnen. Bei einer solchen Phasenverschiebung von 98°, läuft der Potentialverlauf am Ausgang b dem am Ausgang c bzw. n um 98° nach und der am Ausgang a gegenüber den dam Ausgang c bzw. n um 98° vor. Dann ergibt sich, wie Fig. 13b zeigt, einen Spannungsverlauf an den Wicklungen A und B, der um 90° phasenverschoben ist, also so wie er üblicherweise der geometrischen Wicklungsanordnung entspricht. Die sich dann einstellenden Ströme Iₐ, I_{b} und Iₙ sind, wie Fig. 13c zeigt, im Vergleich zu denen gemäß Fig. 12c wesentlich gleichmäßiger. So sind die Amplituden der Ströme Iₐ. und I_{b} gleich hoch, die Amplitude des Stromes Iₙ überragt die der Ströme Iₐ und I_{b} im Vergleich zu Fig. 12c in geringerem Maße.

### Bezugszeichenliste

- 1, 2: - Phasenpermanentmagnetmotor
- 2: - Frequenzumrichter
- 3: - Eingangskreis (Gleichrichter)
- 4: - Zwischenkreis
- 5: - Wechselrichter
- 6: - Schalter
- A: - Wicklung
- B: - Wicklung
- 5a: - Zweiphasiger Wechselrichter
- 5b: - Einphasiger Wechselrichter
- C: - Kondensator
- a: - Ausgänge des Wechselrichters
- b: - Ausgänge des Wechselrichters
- n bzw. c: - Ausgänge des Wechselrichters

## Patentansprüche

1. Zweiphasenpermanentmagnetmotor der durch einen Frequenzumrichter (2) angesteuert ist, **dadurch gekennzeichnet, dass** der den Motor (1) ansteuernde Frequenzumrichter (2) einen Wechselrichter (5) mit dreiphasigem Ausgang (a, b, n) aufweist.

2. Motor nach Anspruch 1, **dadurch gekennzeichnet, dass** der Wechselrichter (5) des Frequenzumrichters (2) sechs paarweise zugeordnete Schalter (6) aufweist, von denen mindestens ein Paar diskontinuierlich geschaltet ist.

3. Verfahren zum Ansteuern eines dreiphasigen Wechselrichters mit sechs Schaltern, die paarweise in Reihe geschaltet sind, wobei die Schalterpaare parallel an den Ausgang eines Gleichspannung führenden Zwischenkreises angeschlossen sind, **dadurch gekennzeichnet, dass** zwischen den Schaltern eines Schalterpaares jeweils mindestens ein Wicklungsende eines Zweiphasenpermanentmagnetmotors angeschlossen ist, derart, dass jede Wicklung zwischen zwei unterschiedlichen Schalterpaaren angeschlossen ist, und die Ansteuerung der Schalter so erfolgt, dass die Wicklungen mit zueinander phasenverschobenen Wechselspannungen beaufschlagt werden, und dass ein Schalter eines Schalterpaares über einen Drehwinkel von mindestens 10°, vorzugsweise zwischen 35° und 100°, geschlossen gehalten und der andere geöffnet wird während durch Modulieren der beiden anderen Schalterpaare der gewünschte Spannungsverlauf an den Wicklungen erzeugt wird.

4. Verfahren nach Anspruch 3, **dadurch gekennzeichnet, dass** die Wicklungen mit im Wesentlichen sinusförmigen und um etwa 90° phasenverschobenen Wechselspannungen beaufschlagt werden.

5. Verfahren nach einem der vorhergehenden Ansprüche, **dadurch gekennzeichnet, dass** der Drehwinkel, während der ein Schalter geschlossen gehalten wird, vorbestimmt und vom aktuellen Winkel der Versorgungsspannung des Stators abhängig ist.

6. Verfahren nach einem der vorhergehenden Ansprüche, **dadurch gekennzeichnet, dass** einer der Schalter geschlossen gehalten wird, der einem der beiden am Ausgang des Zwischenkreises anliegenden Zwischenkreispotentiale nächstliegendes Sollwertpotential führt.

7. Verfahren nach einem der vorhergehenden Ansprüche, **dadurch gekennzeichnet, dass** der Wechselrichter zum Erzeugen von Wechselspannungen niedriger und hoher Spannung und/oder Frequenz ansteuerbar ist und dass ein Schalter eines Schalterpaares über einen Drehwinkel mindestens 10° geschlossen gehalten und der andere geöffnet wird während durch Modulieren der beiden anderen Schalterpaare der gewünschte Spannungsverlauf an den Wicklungen erzeugt, und zwar nur beim Erzeugen von Wechselspannungen hoher Spannung.

8. Verfahren nach einem der vorhergehenden Ansprüche, **dadurch gekennzeichnet, dass** stets der Schalter geschlossen gehalten wird, durch den der größte Strom fließt.

9. Verfahren nach einem der vorhergehenden Ansprüche, **dadurch gekennzeichnet, dass** ein Schalter über einen Drehwinkel von etwa 90° geschlossen gehalten wird.

10. Verfahren nach einem der vorhergehenden Ansprüche, **dadurch gekennzeichnet, dass** ein Schalter des Schalterpaares, zwischen dem die Wicklungsenden beider Wicklungen angeschlossen sind, zunächst über einen Drehwinkel von etwa 90° geschlossen gehalten, dann über etwa 90° modulierend geschaltet wird, wonach der andere Schalter dieses Schalterpaares über etwa 90° geschlossen gehalten und dann über etwa 90° modulierend geschaltet wird.

11. Verfahren nach einem der vorhergehenden Ansprüche, **dadurch gekennzeichnet, dass** in den 90° Intervallen, in denen kein Schalter des Schalterpaares, zwischen dem die Wicklungsenden beider Wicklungen angeschlossen sind, geschlossen gehalten ist, ein Schalter eines der beiden anderen Schalterpaare geschlossen gehalten wird, und zwar während des ersten 90° Intervalls ein Schalter des einen und während des nächsten 90° Intervalls ein Schalter des anderen Schalterpaares.

12. Verfahren nach einem der vorhergehenden Ansprüche, **dadurch gekennzeichnet, dass** in den 90° Intervallen, in denen kein Schalter des Schalterpaares, zwischen dem die Wicklungsenden beider Wicklungen angeschlossen sind, geschlossen gehalten ist, jeweils ein Schalter der beiden anderen Schalterpaare geschlossen gehalten wird, und zwar für die ersten 45° des Intervalls ein Schalter des einen und für die zweiten 45° des Intervalls ein Schalter des anderen Schalterpaares.

13. Verfahren nach einem der vorhergehenden Ansprüche, **dadurch gekennzeichnet, dass** während einer 360° Drehung nur die Schalter geschlossen gehalten werden, welche die Leitungsverbindung zu nur einem der beiden Zwischenkreispotentiale herstellen.

14. Verfahren nach einem der vorhergehenden Ansprüche, **dadurch gekennzeichnet, dass** während einer 360° Drehung Schalter so geschlossen werden, dass abwechselnd über einen Drehwinkel von etwa 180° eine Leitungsverbindung zu einem und nachfolgend zum anderen der beiden Zwischenkreispotentiale hergestellt wird.

15. Verfahren nach einem der vorhergehenden Ansprüche, **dadurch gekennzeichnet, dass** die diskontinuierliche Schalteransteuerung für einen vorbestimmten Winkel von vorzugsweise 1 bis 15 Schaltperioden vor einem Potentialwechsel durch eine kontinuierliche Schalteransteuerung ersetzt wird.

16. Verfahren nach einem der vorhergehenden Ansprüche, **dadurch gekennzeichnet, dass** die Steuerung so erfolgt, dass die Ströme der beiden Motorphasen um einen vorbestimmten Winkel zueinander versetzt verlaufen, vorzugsweise dem geometrischen Winkel der Phasen angepasst.

17. Verfahren nach einem der vorhergehenden Ansprüche, **dadurch gekennzeichnet, dass** die Phasenwinkel zwischen den Sollwertpotentialen der gemeinsamen Phase und den anderen Phasen um einen von 90 ° abweichenden Wert haben, vorzugsweise größer sind.

18. Verfahren nach einem der vorhergehenden Ansprüche, **dadurch gekennzeichnet, dass** die Abweichung des Phasenwinkels zwischen den Sollwertpotentialen der gemeinsamen Phase und den anderen Phasen zwischen 3° und 15° beträgt.

19. Verfahren nach einem der vorhergehenden Ansprüche, **dadurch gekennzeichnet, dass** der Schalter, der beide Phasenwicklungen über einen Drehwinkel von 10° bis 100° mit einem Zwischenkreispotential verbindet um einen Winkel Y später geschlossen wird als die Schalter, welche nur eine Phasenwicklung über einen Drehwinkel von 10° bis 100° mit einem Zwischenkreispotential verbinden und dass letztere Schalter um einen Winkel Y später modulierend geschaltet werden.

20. Verfahren nach Anspruch 19, **dadurch gekennzeichnet, dass** der Winkel Y gleich dem Winkel der Phasenverschiebung zwischen Spannung und Strom in einer Motorphase gewählt wird.

## Claims

1. A two-phase permanent magnet motor which is activated by a frequency converter (2), **characterised in that** the frequency converter (2) activating the motor (1) comprises an inverter (5) with a three-phase output (a, b, n).

2. A motor according to claim 1, **characterised in that** the inverter (5) of the frequency converter (2) comprises six switches (6) allocated in pairs, of which at least one pair is switched in a discontinuous manner.

3. A method for activating a three-phase inverter with six switches, which are connected in pairs in series, wherein the switch pairs are connected in parallel to the output of an intermediate circuit leading a constant voltage, **characterised in that** in each case at least one winding end of a two-phase permanent magnet motor is connected between the switches of one switch pair, in a manner such that each winding is connected between two different switch pairs, and the activation of the switches is effected in a manner such that the windings are subjected to alternating voltages which are phase-shifted to one another, and that one switch of the switch pair is kept closed over a rotation angle of at least 10°, preferably between 35° and 100°, and the other is opened, whilst the desired voltage course at the windings is produced by way of modulation of the two other switch pairs.

4. A method according to claim 3, **characterised in that** the windings are subjected to essentially sinusoidal alternating voltages which are phase shifted by about 90°.

5. A method according to one of the preceding claims, **characterised in that** the rotation angle during which the one switch is kept closed, is predefined and is dependent on the current angle of the supply voltage of the stator.

6. A method according to one of the preceding claims, **characterised in that** one of the switches is kept closed, which leads a set value potential lying closest to one of the two intermediate circuit potentials prevailing at the output of the intermediate circuit.

7. A method according to one of the preceding claims, **characterised in that** the inverter may be activated for producing alternating voltages of a lower and higher voltage and/or frequency, and that a switch of one switch pair, over a rotation angle of at least 10°, is kept closed and the other opened, whilst the desired voltage course at the windings is produced by way of modulating the two other switch pairs, and specifically only on producing alternating voltages of a high voltage.

8. A method according to one of the preceding claims, **characterised in that** it is always the switch through which the largest current flows which is kept closed.

9. A method according to one of the preceding claims, **characterised in that** one switch is kept closed over a rotation angle of about 90°.

10. A method according to one of the preceding claims, **characterised in that** a switch of the switch pair, between which the winding ends of both windings are connected, is firstly kept closed over a rotation angle of about 90°, then is switched in a modulating manner over about 90°, whereupon the other switch of this switch pair is kept closed over about 90° and is then switched in a modulating manner over about 90°.

11. A method according to one of the preceding claims, **characterised in that** in the 90°-intervals, in which no switch of the switch pair between which the winding ends of both windings are connected, is kept closed, a switch of one of the two other switch pairs is kept closed, and specifically during the first 90°-interval a switch of the one, and during the next 90°-interval, a switch of the other switch pair.

12. A method according to one of the preceding claims, **characterised in that** in the 90°- intervals, in which no switch of the switch pair between which the winding ends of both windings are connected, is kept closed, in each case one switch of the two other switch pairs is kept closed, and specifically a switch of the one switch pair for the first 45° of the interval and a switch of the other switch pair for the second 45° of the interval.

13. A method according to one of the preceding claims, **characterised in that** during a 360°-rotation, only those switches are kept closed, which create the lead connection to only one of the two intermediate circuit potentials.

14. A method according to one of the preceding claims, **characterised in that** during a 360°-rotation the switches are closed such that over a rotation angle of about 180°, one lead connection to one, and subsequently to the other of the two intermediate circuit potentials is created in an alternating manner.

15. A method according to one of the preceding claims, **characterised in that** the discontinuous switch activation, for a predefined angle of preferably 1 to 15 switch periods before a potential change, is replaced by continuous switch activation.

16. A method according to one of the preceding claims, **characterised in that** the control is effected such that the currents of the two motor phases run shifted to one another by a predefined angle, preferably adapted to the geometric angle of the phases.

17. A method according to one of the preceding claims, **characterised in that** the phase angles between the set value potentials of the common phase and the other phases have a value deviating from 90°, are preferably larger.

18. A method according to one of the preceding claims, **characterised in that** the deviation of the phase angle between the set value potentials of the common phase and the other phases is between 3° and 15°.

19. A method according to one of the preceding claims, **characterised in that** the switch which connects both phase windings over a rotation angle of 10° to 100° to an intermediate circuit potential, is closed by an angle Y later than the switches which connect only one phase winding over a rotation angle of 10° to 100° to an intermediate circuit potential, and that the latter switch is switched in a modulating manner by an angle Y later.

20. A method according to claim 19, **characterised in that** the angle Y is selected equal to the angle of the phase shift between the voltage and the current in a motor phase.

## Revendications

1. Moteur à aimants permanents diphasé, qui est excité par un convertisseur de fréquence (2), **caractérisé en ce que** le convertisseur de fréquence (2) excitant le moteur (1), comprend un onduleur (5) à sortie en triphasé (a, b, n).

2. Moteur selon la revendication 1, **caractérisé en ce que** l'onduleur (5) du convertisseur de fréquence (2) comprend six interrupteurs (6) associés par paires, dont au moins une paire est commutée de façon intermittente.

3. Procédé pour exciter un onduleur triphasé comportant six interrupteurs qui sont montés en série par paires, les paires d'interrupteurs étant connectées en parallèle à la sortie d'un circuit intermédiaire véhiculant une tension continue, **caractérisé en ce qu'**entre les interrupteurs de chacune des paires d'interrupteurs est respectivement connectée au moins une extrémité d'enroulement d'un moteur à aimants permanents diphasé, ceci d'une manière telle, que chaque enroulement soit connecté entre deux paires différentes d'interrupteurs, et l'excitation des interrupteurs s'effectue de telle façon que les enroulements soient soumis à l'application de tensions alternatives mutuellement déphasées, et **en ce qu'**un interrupteur d'une paire d'interrupteurs est maintenu fermé sur un angle de rotation d'au moins 10°, de préférence entre 35° et 100°, et l'autre est ouvert pendant que, par modulation des deux autres paires d'interrupteurs, l'allure souhaitée de la tension sur les enroulements est générée.

4. Procédé selon la revendication 3, **caractérisé en ce que** les enroulements sont soumis à l'application de tensions alternatives sensiblement sinusoïdales et déphasées d'environ 90°.

5. Procédé selon l'une des revendications précédentes, **caractérisé en ce que** l'angle de rotation, pendant lequel un interrupteur est maintenu fermé, est prédéterminé et est fonction de l'angle de la tension d'alimentation du stator à l'instant considéré.

6. Procédé selon l'une des revendications précédentes, **caractérisé en ce qu'**est maintenu fermé l'un des interrupteurs qui fait passer un potentiel de valeur de consigne le plus proche de l'un des deux potentiels du circuit intermédiaire, présents à la sortie du circuit intermédiaire.

7. Procédé selon l'une des revendications précédentes, **caractérisé en ce que** l'onduleur peut être excité pour générer des tensions alternatives de basse et haute valeur de tension et/ou fréquence, et **en ce qu'**un interrupteur d'une paire d'interrupteurs est maintenu fermé sur un angle de rotation d'au moins 10° et l'autre est ouvert pendant que, par modulation des deux autres paires d'interrupteurs, l'allure souhaitée de la tension sur les enroulements est générée, ceci uniquement dans le cas de la génération de tensions alternatives de haute valeur de tension.

8. Procédé selon l'une des revendications précédentes, **caractérisé en ce qu'**est maintenu continuellement fermé, l'interrupteur à travers lequel circule le courant le plus intense.

9. Procédé selon l'une des revendications précédentes, **caractérisé en ce qu'**un interrupteur est maintenu fermé sur un angle de rotation d'environ 90°.

10. Procédé selon l'une des revendications précédentes, **caractérisé en ce qu'**un interrupteur de la paire d'interrupteurs au milieu de laquelle sont connectées les extrémités d'enroulement des deux enroulements, est tout d'abord maintenu fermé sur un angle de rotation d'environ 90°, puis est commuté d'une façon modulée sur environ 90°, après quoi l'autre interrupteur de cette paire d'interrupteurs est maintenu fermé sur environ 90° et est ensuite commuté, d'une façon modulée, sur environ 90°.

11. Procédé selon l'une des revendications précédentes, **caractérisé en ce que** dans les intervalles de 90°, dans lesquels aucun interrupteur de la paire d'interrupteurs, au milieu de laquelle sont connectées les extrémités d'enroulement des deux enroulements, n'est maintenu fermé, un interrupteur de l'une des deux autres paires d'interrupteurs est maintenu fermé, plus précisément un interrupteur de l'une d'elles durant le premier intervalle de 90° et un interrupteur de l'autre paire d'interrupteurs durant l'intervalle suivant de 90°.

12. Procédé selon l'une des revendications précédentes, **caractérisé en ce que** dans chacun des intervalles de 90°, dans lesquels aucun interrupteur de la paire d'interrupteurs, au milieu de laquelle sont connectées les extrémités d'enroulement des deux enroulements, n'est maintenu fermé, un interrupteur des deux autres paires d'interrupteurs est maintenu fermé, plus précisément un interrupteur de l'une de celles-ci pour les premiers 45° de l'intervalle et un interrupteur de l'autre paire d'interrupteurs pour les seconds 45° de l'intervalle.

13. Procédé selon l'une des revendications précédentes, **caractérisé en ce qu'**au cours d'une rotation de 360°, seuls sont maintenus fermés les interrupteurs qui établissent la liaison conductrice à l'un seulement des deux potentiels du circuit intermédiaire.

14. Procédé selon l'une des revendications précédentes, **caractérisé en ce qu'**au cours d'une rotation de 360°, des interrupteurs sont fermés de telle façon que soit établie en alternance, sur un angle de rotation d'environ 180°, une liaison conductrice à l'un des deux potentiels du circuit intermédiaire et ensuite à l'autre.

15. Procédé selon l'une des revendications précédentes, **caractérisé en ce que** l'excitation intermittente d'interrupteur est, pour un angle prédéterminé, de préférence de 1 à 15 périodes de commutation, précédant un changement de potentiel, remplacée par une excitation continue d'interrupteur.

16. Procédé selon l'une des revendications précédentes, **caractérisé en ce que** la commande s'effectue de telle façon que les courants des deux phases du moteur se développent suivant un décalage mutuel d'un angle prédéterminé, de préférence adapté à l'angle géométrique des phases.

17. Procédé selon l'une des revendications précédentes, **caractérisé en ce que** les angles de phase entre les potentiels de valeur de consigne de la phase commune et les autres phases, ont environ une valeur s'écartant de 90°, de préférence sont supérieurs à 90°.

18. Procédé selon l'une des revendications précédentes, **caractérisé en ce que** l'écart de l'angle de phase entre les potentiels de valeur de consigne de la phase commune et les autres phases, se situe entre 3° et 15°.

19. Procédé selon l'une des revendications précédentes, **caractérisé en ce que** l'interrupteur, qui relie les deux enroulements de phase, sur un angle de rotation de 10° à 100°, à un potentiel du circuit intermédiaire, est fermé plus tard, d'un angle Y, que les interrupteurs qui relient un seul enroulement de phase, sur un angle de rotation de 10° à 100°, à un potentiel du circuit intermédiaire, et **en ce que** ces derniers interrupteurs sont commutés plus tard d'un angle Y, d'une façon modulée.

20. Procédé selon la revendication 19, **caractérisé en ce que** l'angle Y est choisi égal à l'angle du déphasage entre la tension et le courant dans une phase du moteur.
